# EUROPEAN PATENT APPLICATION

(11) **EP 2 154 873 A1**
(43) Date of publication of application: **17.02.2010**
(21) Application number: 08764614.7
(22) Date of filing: 23.05.2008
(51) Int. Cl.: H04M 1/00, G06F 13/00, H04M 11/00, H04N 5/66, H04N 7/173, H04Q 7/32

(54) **MOBILE TERMINAL APPARATUS, ITS TELEVISION DISPLAY METHOD AND PROGRAM**

(30) Priority: 29.05.2007 JP 2007142398
(71) Applicant: Nec Corporation, Tokyo 108-8001 (JP)
(72) Inventor: FU, Honglin, Tokyo 108-8001 (JP)
(74) Representative: Sieckmann, Dirk Christoph
(86) International application number: PCT/JP2008/059568
(87) International publication number: WO 2008/146747

(57) **Abstract**

According to the present invention, when the notification of the electronic mail reception is received while receiving the television broadcast and the contents of the received electronic mail are browsed, the contents of the received electronic mail can be browsed by the easily and reliably executable user operation without obstructing the watching and listening of the television broadcast. A mobile terminal apparatus comprising: television-broadcast receiving means for receiving television broadcast; electronic-mail transmitting and receiving means for transmitting and receiving an electronic mail; information display means for performing display of various types of information, and sensing a tactile sensation; and control means for controlling display of the information display means. When the electronic mail is received by the electronic-mail transmitting and receiving means while displaying a television program on the information display means by the television-broadcast receiving means, the control means displays, on the information display means, notification display for notifying a message that the electronic mail is received, and when a tactile sensation to the notification display is sensed by the information display means, the control means displays contents of the received electronic mail on the information display means while displaying the television program on the information display means.

## Description

### Technical Field

The present invention relates to a mobile terminal apparatus having a television-broadcast receiving function and an electronic-mail transmitting and receiving function, and a television display method and a program of the same.

### Background Art

Some of mobile terminal apparatuses having the television-broadcast receiving function and the mail transmitting and receiving function related to the present invention have, for example, a function of notifying a user of reception of an electronic mail by displaying a ticker or an icon on a television screen when the electronic mail is received (arrives) while receiving television broadcast. For example, in Patent Document 1, there is disclosed a function of displaying a screen for notifying electronic mail reception separately from a television screen when an electronic mail is received while reception of television broadcast.

In the above-described mobile terminal, when notification of the electronic mail reception is received while receiving the television broadcast by the above-described function, a user operation to browse contents of the received electronic mail is required. For example, a user operation to select starting-up of the electronic mail browsing function from a function selection menu or the like is required. When such a user operation is performed, for example, reproduction of a television program is changed so as to be performed only through audio, and a screen on which the television program is being displayed is switched to the display of the received mail. Thus, there are problems that when the contents of the electronic mail received while receiving the television broadcast are browsed, the complicated user operation is required, and that since the screen is switched to the display of the received electronic mail, the reception of the television broadcast cannot be continued.

Moreover, in some mobile terminal apparatuses, when the contents of the electronic mail received while receiving the television broadcast are browsed, long pressing of a specific operation key or the like allows the screen to be switched to a screen for browsing the contents of the received electronic mail. However, while the one-touch user operation allows the contents of the received electronic mail to be displayed, there is a possibility that the user forgets the operation key, and thus, there has been a problem of a problem in terms of usability for the user.

### [Patent Document 1]

Japanese Unexamined Patent Application Publication No. 2005-130132

### Disclosure of the Invention

### Technical Problem

The present invention has been made in light of the above-described situations, and an object thereof is to provide a mobile terminal apparatus that enables contents of a received electronic mail to be browsed by an easily and reliably executable user operation without interrupting the watching and listening of television broadcast when electronic mail reception is notified while receiving the television broadcast and the contents of the received electronic mail are browsed, and a television display method and a program of the same.

### Technical Solution

To achieve the above-described object, there is provided a mobile terminal apparatus as a first embodiment of the present invention, includes television-broadcast receiving means for receiving television broadcast, electronic-mail transmitting and receiving means for transmitting and receiving an electronic mail, information display means for performing display of various types of information, and sensing a tactile sensation, and control means for controlling display of the information display means, the mobile terminal apparatus **characterized in that** when the electronic mail is received by the electronic-mail transmitting and receiving means while displaying a television program on the information display means by the television-broadcast receiving means, the control means displays, on the information display means, notification display for notifying a message that the electronic mail is received, and when a tactile sensation to the notification display is sensed by the information display means, the control means displays contents of the received electronic mail on the information display means while displaying the television program on the information display means.

In the mobile terminal apparatus according to the first embodiment of the present invention, when the tactile sensation to the notification display is sensed by the information display means, the control means divides a display region of the information display means into two, and the television program is displayed in one of the two divided display regions, and the received electronic mail is displayed in the other of the same.

In the mobile terminal apparatus according to the first embodiment of the present invention, the control means displays the television program in a scaled-down size in the display region where the television program is to be displayed among the two divided display regions.

The mobile terminal apparatus according to the first embodiment of the present invention, having telephone means for performing a voice telephone call, is **characterized in that** when a voice telephone call is received by the telephone means while displaying the television program on the information display means by the television-broadcast receiving means, the control means displays, on the information display means, notification display for notifying a message that the voice telephone call is received, when a tactile sensation to the notification display is sensed by the information display means, the control means temporarily stores channel information indicating the television program being displayed on the information display means, and halts the display of the television program to enable the voice telephone call, and when the voice telephone call ends, the control means again displays the halted television program based on the temporarily-stored channel information.

In the mobile terminal apparatus according to the first embodiment of the present invention, the control means displays, as the notification display, at least one of a translucent ticker and an icon, the translucent ticker and the icon being configured such that the television program currently displayed in the information display means can be viewed.

In the mobile terminal apparatus according to the first embodiment of the present invention, the control means displays the translucent ticker with at least a name of a sender included therein.

There is provided a mobile terminal apparatus as a second embodiment of the present invention, includes television-broadcast receiving means for receiving television broadcast, telephone means for performing a voice telephone call, information display means for performing display of various types of information, and sensing a tactile sensation, and control means for controlling display of the information display means, the mobile terminal apparatus **characterized in that** when a voice telephone call is received by the telephone means while displaying a television program on the information display means by the television-broadcast receiving means, the control means displays, on the information display means, notification display for notifying a message that the voice telephone call is received, when a tactile sensation to the notification display is sensed by the information display means, the control means temporarily stores channel information indicating the television program being displayed on the information display means, and halts the display of the television program to enable the voice telephone call, and when the voice telephone call ends, the control means again displays the halted television program based on the temporarily-stored channel information.

In the mobile terminal apparatus according to the second embodiment of the present invention, the control means displays, as the notification display, at least one of a translucent ticker and an icon, the translucent ticker and the icon being configured such that the television program currently displayed in the information display means can be viewed.

In the mobile terminal apparatus according to the second embodiment of the present invention, the control means displays the translucent ticker with at least a name of a sender included therein.

There is provided a television display method of a mobile terminal apparatus as a first embodiment of the present invention, including information display means for displaying various types of information and sensing a tactile sensation, the method **characterized in that** when an electronic mail is received while displaying a television program on the information display means, notification display for notifying a message that the electronic mail is received is displayed on the information display means, and when a tactile sensation to the notification display is sensed by the information display means, contents of the received electronic mail are displayed on the information display means while displaying the television program on the information display means.

In the television display method of the mobile terminal apparatus according to the first embodiment of the present invention, when a tactile sensation to the notification display is sensed by the information display means, a display region of the information display means is divided into two, and the television program is displayed in one of the two divided display regions, and the received electronic mail is displayed in the other of the two divided display regions.

In the television display method of the mobile terminal apparatus according to the first embodiment of the present invention, the television program is scaled down and displayed in the display region where the television program is to be displayed among the two divided display regions.

In the television display method of the mobile terminal apparatus according to the first embodiment of the present invention, when a voice telephone call is received while displaying the television program on the information display means, notification display for notifying a message that the voice telephone call is received is displayed on the information display means, when tactile sensation to the notification display is sensed by the information display means, channel information indicating the television program being displayed on the information display means is temporarily stored, and the display of the television program is halted to enable the voice telephone call, and when the voice telephone call ends, the halted television program is again displayed based on the temporarily-stored channel information.

In the television display method of the mobile terminal apparatus according to the first embodiment of the present invention, as the notification display, at least one of a translucent ticker and an icon is displayed, the translucent ticker and the icon being configured such that the television program currently displayed in the information display means can be viewed.

In the television display method of the mobile terminal apparatus according to the first embodiment of the present invention, the translucent ticker is displayed with at least a name of a sender included therein.

There is provided a television display method of a mobile terminal apparatus as a second embodiment of the present invention, including information display means for displaying various types of information and sensing a tactile sensation, the method **characterized in that** when a voice telephone call is received while displaying a television program on the information display means, notification display for notifying a message that the voice telephone call is received is displayed on the information display means, and when a tactile sensation to the notification display is sensed by the information display means, channel information indicating the television program being displayed on the information display means is temporarily stored, and the display of the television program is halted to enable the voice telephone call, and when the voice telephone call ends, the halted television program is again displayed based on the temporarily-stored channel information.

In the television display method of the mobile terminal apparatus according to the second embodiment of the present invention, as the notification display, at least one of a translucent ticker and an icon is displayed, the translucent ticker and the icon being configured such that the television program currently displayed in the information display means can be viewed.

In The television display method of the mobile terminal apparatus according to the second embodiment of the present invention, the translucent ticker is displayed with at least a name of a sender included therein.

There is provided a program as a first embodiment of the present invention, characterized by causing a computer to execute, processing of displaying of various types of information and displaying a television program on information display means for sensing a tactile sensation, processing of receiving an electronic mail while displaying the television program on the information display means, processing of displaying, on the information display means, notification display for notifying a message that the electronic mail is received, and processing of displaying contents of the received electronic mail on the information display means while displaying the television program on the information display means, when a tactile sensation to the notification display is sensed by the information display means.

The program according to the first embodiment of the present invention, is characterized by causing a computer to execute, processing of dividing a display region of the information display means into two, when a tactile sensation to the notification display is sensed by the information display means, and processing of displaying the television program in one of the two divided display regions, and displaying the received electronic mail in the other of the two divided display regions.

The program according to the first embodiment of the present invention, is characterized by causing a computer to execute processing of displaying the television program in a scaled-down size in the display region where the television program is to be displayed among the two divided display regions.

The program according to the first embodiment of the present invention, is characterized by causing a computer to execute, processing of displaying, on the information display means, notification display for notifying a message that a voice telephone call is received when the voice telephone call is received while displaying the television program on the information display means, processing of temporarily storing channel information indicating the television program being displayed on the information display means, and halting the display of the television program to enable the voice telephone call when tactile sensation to the notification display is sensed by the information display means, and processing of again displaying the halted television program based on the temporarily-stored channel information when the voice telephone call ends.

The program according to the first embodiment of the present invention, is characterized by causing a computer to execute processing of displaying, as the notification display, at least one of a translucent ticker and an icon, the translucent ticker and the icon being configured such that the television program currently displayed in the information display means can be viewed.

The program according to the first embodiment of the present invention, is characterized by causing a computer to execute processing of displaying the translucent ticker with at least a name of a sender included therein.

There is provided a program as a second embodiment of the present invention, is characterized by causing a computer to execute, processing of displaying of various types of information and displaying a television program on information display means for sensing a tactile sensation, processing of receiving a voice telephone call while displaying the television program on the information display means, processing of displaying, on the information display means, notification display for notifying a message that the voice telephone call is received, processing of temporarily storing channel information indicating the television program being displayed on the information display means, and halting the display of the television program to enable the voice telephone call, when a tactile sensation to the notification display is sensed by the information display means, and processing of again displaying the halted television program based on the temporarily-stored channel information, when the voice telephone call ends.

The program according to the second embodiment of the present invention, is characterized by causing a computer to execute processing of displaying, as the notification display, at least one of a translucent ticker and an icon, the translucent ticker and the icon being configured such that the television program currently displayed in the information display means can be viewed.

The program according to the second embodiment of the present invention, is characterized by causing a computer to execute processing of displaying the translucent ticker with at least a name of a sender therein.

### Advantageous Effects

According to the present invention, when the notification of the electronic mail reception is received while receiving the television broadcast and the contents of the received electronic mail are browsed, the contents of the received electronic mail can be browsed by the easily and reliably executable user operation without obstructing the watching and listening of the television broadcast.

### Best Mode for Carrying out the Invention

Hereinafter, best modes for carrying out the invention are described in detail with reference to the accompanying drawings.

A mobile terminal apparatus as an embodiment of the present invention is a mobile terminal apparatus capable of displaying a television program on a touch screen, **characterized in that** when an electronic mail is received while receiving the television program, a translucent ticker is displayed on a television screen with the television program displayed to thereby notify reception of the electronic mail. Moreover, the apparatus is **characterized in that** when a user touches the translucent ticker displayed on the television screen, the television screen is displayed in a scaled-down size, and contents of the received electronic mail are displayed next to the scaled-down television screen. This allows the contents of the received electronic mail to be checked while making the interruption of the watching and listening of the television program as little as possible.

Moreover, a sender name, an address and the like of the received electronic mail may be displayed in the translucent ticker.

Further, when the electronic mail is received, an icon may be displayed in a portion of the television screen to notify the reception of the mail.

### [Embodiment 1]

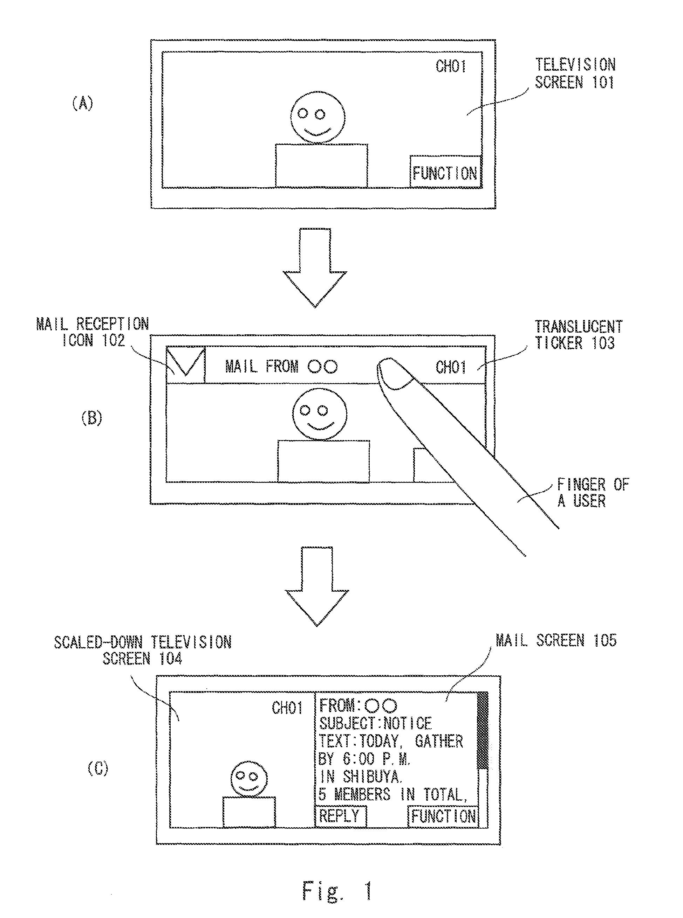

In Fig. 1, an example of a display screen of a mobile terminal apparatus as an embodiment of the present invention is shown. In the mobile terminal apparatus in accordance with the present invention, a screen functioning as an information display unit is composed of a touch screen (tactile sensation sensing display). As the touch screen, one commonly used at the present day is used, and a description thereof is omitted.

Fig. 1(A) shows a. screen while display of a television program, when the television screen 101 (television program) is being displayed using the whole screen. At this time, upon reception of an electronic mail, at least one of a mail reception icon and a translucent ticker is displayed on the television screen 101 as means for notifying a user of the reception of the electronic mail. Fig. 1(B) shows a case where a mail reception icon 102 and a translucent ticker 103 are both displayed.

As shown in Fig. 1(B), since the mail reception icon 102 is displayed in an upper end of the television screen 101, the display of the television program on the television screen 101 is not interrupted. The display position of the mail reception icon 102 is not limited to the upper end of the television screen 101, but it may be any position where the icon does not interrupt the display of the television program on the television screen 101.

Moreover, as shown in Fig. 1(B), since the translucent ticker 103 is displayed so that the television screen 101 being displayed is seen therethrough, the display of the television program on the television screen 101 is not interrupted. This translucent ticker 103 may be displayed only for a predetermined period (e.g., for four seconds or the like). Moreover, as contents (notification contents) included in the translucent ticker 103, in addition to a sender name of the electronic mail shown in Fig. 1(B), an address of the sender, a title of the received electronic mail, a reception time and date and the like may be included. Alternatively, as the contents (notification contents) included in the translucent ticker 103, a massage saying "one mail has been received" may be simply included.

In the state shown in Fig. 1(B), in order to check the contents of the received electronic mail, the user touches the mail reception icon 102 or the translucent ticker 103 by a finger, a touch pen or the like. The television screen 101 displayed on the whole screen is displayed in a scaled-down size as a scaled-down television screen 104, as shown in Fig. 1(C). Also, a mail screen 105 showing the contents (text and the like) of the received electronic mail is displayed adjacent to this scaled-down television screen 104. While in Fig. 1(C), a ratio of display regions (areas) of the scaled-down television screen 104 and the mail screen 105 is about fifty-fifty (5:5), the user may be able to set arbitrary sizes of the respective display regions in advance.

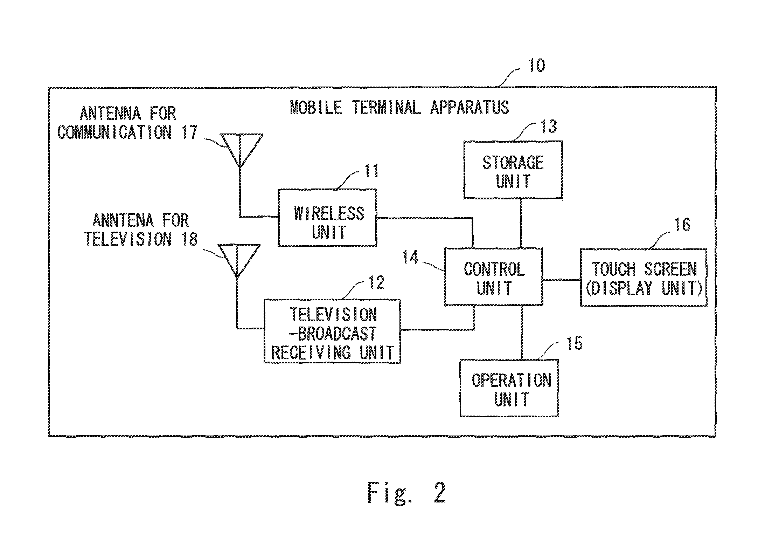

Fig. 2 is a block diagram showing a principal part of the mobile terminal apparatus 10 as an embodiment of the present invention. Hereinafter, respective units of the principal part are described,

A wireless unit 11 is used to connect to a mobile communication network and an internet whose illustration is omitted, and generates received data (including an electronic mail) from a radio wave received in an antenna for communication 17 and transmit it to a control unit 14. Moreover, transmission data at generated in the control unit 14 (including an electronic mail) is converted into a radio wave for communication.

A television-broadcast receiving unit 12 decodes a received wave of a television program received at in an antenna for television 18 and transmit it to the control unit 14.

A storage unit 13 stores a control program of the mobile terminal apparatus 10, a received electronic mail, another information and the like.

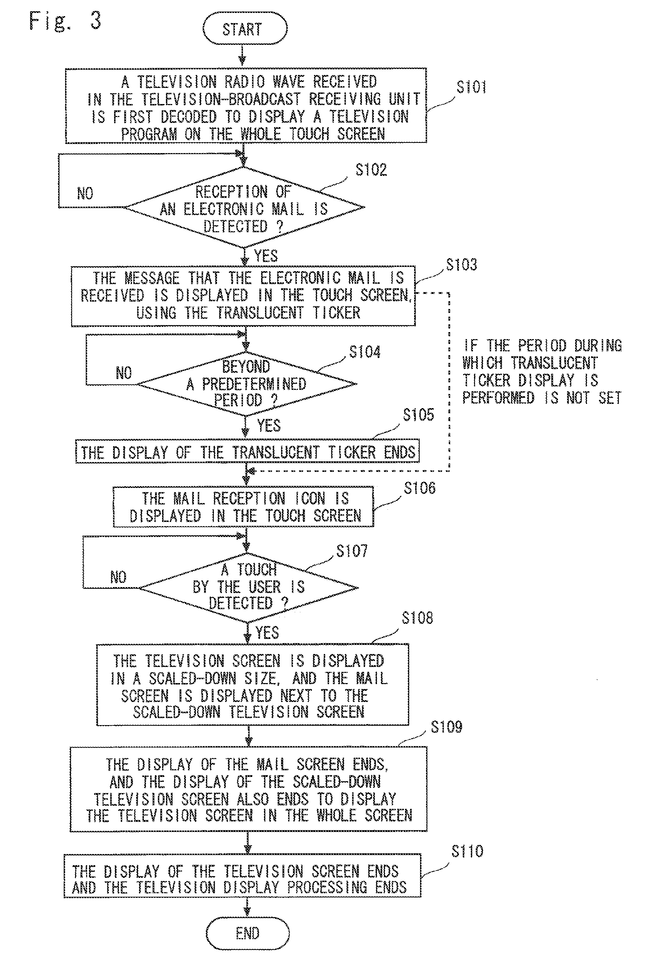

The control unit 14 reads out the control program stored in the storage unit 13, and in accordance with the control program, executes various types of processing such as display processing of the television program, and transmission and reception processing and display processing of the electronic mail (including a flow shown in Fig. 3).

An operation unit 15 has a numeric keypad, a cursor key and the like to receive an input by the user. However, since the present invention includes the touch screen, the operation unit 15 may be provided as needed.

A touch screen 16 displays the television program and various types of information such as the electronic mail screen, and has a function of sensing a touch of a fmger of the user or the like in a predetermined position on the display region (tactile sensation sensing function).

In Fig. 3, an example of an operation (a television display method as an embodiment of the present invention) of the mobile terminal apparatus as an embodiment of the present invention is shown.

When the television display processing is executed, a television radio wave received in the television-broadcast receiving unit 12 is first decoded to display a television program on the whole touch screen 16 (step S101).

Next, the reception of an electronic mail is monitored (step S102). If reception of an electronic mail is detected (step S102/YES), the message that the electronic mail is received is displayed, for example, in an upper portion (or a lower portion) of the touch screen 16 (television screen 101), using the translucent ticker 103 (step S103). As described above, the translucent ticker 103 includes a sender name of the received electronic mail and the like.

Whether or not the translucent ticker 103 has been displayed beyond a predetermined period set in advance (period during which the ticker display is performed, for example, four seconds or the like) is measured (step S104). If it has been displayed beyond the predetermined time set in advance (step S104/YES), the display of the translucent ticker 103 ends (step S105). If the period during which the ticker display is performed is not set, the display of the translucent ticker 103 is continued (in Fig. 3, the processing skips steps S104 and S105 from step S103 and advances to step S106. Refer to a dashed line arrow).

Then, the mail reception icon 102 is displayed in the upper end (step S106).

Next, if a touch by the user to the mail arrival icon 102 or the translucent ticker 103 is detected (step S107), the television screen 101 is displayed in a scaled-down size, and the mail screen 105 is displayed next to the scaled-down television screen 104 (step S108).

Thereafter, when an operation to end the display of the mail screen 105 is performed by the user, the display of the mail screen 105 ends, and the display of the scaled-down television screen 104 also ends to display the television screen 101 in the whole screen (step S109).

When an operation to end the display of the television screen 101 is performed by the user, the display of the television screen 101 ends and the television display processing ends (step S110).

The mail reception icon 102 adapted to be displayed in the above-described step S106 may be displayed simultaneously at the start of the display of the translucent ticker 103 (step S103). In this case, although the display of the translucent ticker 103 ends after the predetermined time has passed, the mail arrival icon 102 may be continuously displayed unless the received mail is read.

As described above, according to the mobile terminal apparatus as an embodiment of the present invention, when the electronic mail is received while viewing of the television, the arrival of the mail is notified in the translucent ticker, and further the contents of the received electronic mail are displayed next to the television screen by the one-touch operation. This allows the contents of the received mail to be checked while making interruption of the viewing (watching and listing) of the television program as little as possible

### [Embodiment 2]

While in the above-described first embodiment, the reception of the electronic mail while receiving the television broadcast has been described, an incoming telephone call while receiving the television broadcast is described as a second embodiment. Since a basic configuration and a basic operation of a mobile terminal apparatus are similar to those of the above-described first embodiment, descriptions here are omitted.

When there is an incoming telephone call while receiving the television broadcast, the message that the incoming telephone call is present (alternatively, a caller name or the like) is displayed in the upper portion or the like of the television screen using the translucent ticker or an icon. When the translucent ticker 103 is touched by the user, channel information indicating a channel being received is temporarily stored in the storage unit 13, and the television broadcast reception is halted to switch to a telephone call mode (state where the telephone call with a caller is enabled). This switching allows the user to normally talk with the caller on the telephone. When an operation to end the telephone call is performed by the user, the channel information is read out from the storage unit 13, and based on the channel information, the halted television broadcast reception is restarted.

Although the present invention has been described with reference to the exemplary embodiment, it is not limited to the above exemplary embodiment. Therefore, the constitutions and details of this invention can be variously changed within the scope of this invention as will be apparent to those skilled in the art.

This application is based upon and claims the benefit of priority from Japanese patent application No. 2007-142398, filed on March 29, 2007, the disclosure of which is incorporated herein in its entirety by reference.

### Industrial Applicability

The present invention can be applied to an apparatus, equipment, a system, a method and a program capable of receiving an electronic mail and a telephone call while receiving television broadcast.

### Brief Description of Drawings

Fig. 1 is an explanatory view showing a display screen of a mobile terminal apparatus as an embodiment of the present invention;
Fig. 2 is a block diagram showing a principal part of the mobile terminal apparatus as an embodiment of the present invention;
Fig. 3 is a flowchart showing an operation of the mobile terminal apparatus as an embodiment of the present invention.

### Explanation of Reference

10 MOBILE TERMINAL APPARATUS
11 WIRELESS UNIT (PORTION OF THE ELECTRONIC-MAIL TRANSMITTING AND RECEIVING MEANS, PORTION OF THE TELEPHONE MEANS)
12 TELEVISION-BROADCAST RECEIVING UNIT(PORTION OF THE TELEVISION-BROADCAST RECEIVING MEANS)
13 STORAGE UNIT
14 CONTROL UNIT (CONTROL MEANS)
15 OPERATION UNIT
16 TOUCH SCREEN (AN EXAMPLE OF THE INFORMATION DISPLAY MEANS)
17 ANTENNA FOR COMMUNICATION (PORTION OF THE ELECTRONIC-MAIL TRANSMITTING AND RECEIVING MEATS, PORTION OF THE TELEPHONE MEANS)
18 ANNTENA FOR TELEVISION (PORTION OF THE TELEVISION-BROADCAST RECEIVING MEANT)
101 TELEVISION SCREEN (NVHOLE SCREEN)
102 MAIL RECEPTION ICON (AN EXAMPLE OF A NOTIFICATION DISPLAY)
103 TRANSLUCENT TICKER (AN EXAMPLE OF A NOTIFICATION DISPLAY)
104 SCALED-DOWN TELEVISION SCREEN
105 MAIL SCREEN

## Claims

1. A mobile terminal apparatus comprising:
television-broadcast receiving means for receiving television broadcast;
electronic-mail transmitting and receiving means for transmitting and receiving an electronic mail;
information display means for performing display of various types of information, and sensing a tactile sensation; and
control means for controlling display of the information display means, the mobile terminal apparatus **characterized in that**
when the electronic mail is received by the electronic-mail transmitting and receiving means while displaying a television program on the information display means by the television-broadcast receiving means, the control means displays, on the information display means, notification display for notifying a message that the electronic mail is received, and
when a tactile sensation to the notification display is sensed by the information display means, the control means displays contents of the received electronic mail on the information display means while displaying the television program on the information display means.

2. The mobile terminal apparatus according to Claim 1, **characterized in that**
when the tactile sensation to the notification display is sensed by the information display means, the control means divides a display region of the information display means into two, and
the television program is displayed in one of the two divided display regions, and the received electronic mail is displayed in the other of the same.

3. The mobile terminal apparatus according to Claim 2, **characterized in that** the control means displays the television program in a sealed-down size in the display region where the television program is to be displayed among the two divided display regions.

4. The mobile terminal apparatus according to any one of Claims 1 to 3, having telephone means for performing a voice telephone call, **characterized in that**
when a voice telephone call is received by the telephone means while displaying the television program on the information display means by the television-broadcast receiving means, the control means displays, on the information display means, notification display for notifying a message that the voice telephone call is received,
when a tactile sensation to the notification display is sensed by the information display means, the control means temporarily stores channel information indicating the television program being displayed on the information display means, and halts the display of the television program to enable the voice telephone call, and
when the voice telephone call ends, the control means again displays the halted television program based on the temporarily-stored channel information.

5. The mobile terminal apparatus according to any one of Claims 1 to 4, **characterized in that** the control means displays, as the notification display, at least one of a translucent ticker and an icon, the translucent ticker and the icon being configured such that the television program currently displayed in the information display means can be viewed.

6. The mobile terminal apparatus according to Claim 5, **characterized in that** the control means displays the translucent ticker with at least a name of a sender included therein.

7. A mobile terminal apparatus comprising:
television-broadeast receiving means for receiving television broadcast;
telephone means for performing a voice telephone call;
information display means for performing display of various types of information, and sensing a tactile sensation; and
control means for controlling display of the information display means, the mobile terminal apparatus **characterized in that**
when a voice telephone call is received by the telephone means while displaying a television program on the information display means by the television-broadcast receiving means, the control means displays, on the information display means, notification display for notifying a message that the voice telephone call is received,
when a tactile sensation to the notification display is sensed by the information display means, the control means temporarily stores channel information indicating the television program being displayed on the information display means, and halts the display of the television program to enable the voice telephone call, and
when the voice telephone call ends, the control means again displays the halted television program based on the temporarily-stored channel information.

8. The mobile terminal apparatus according to Claim 7, **characterized in that** the control means displays, as the notification display, at least one of a translucent ticker and an icon, the translucent ticker and the icon being configured such that the television program currently displayed in the information display means can be viewed.

9. The mobile terminal apparatus according to Claim 8, **characterized in that** the control means displays the translucent ticker with at least a name of a sender included therein.

10. A television display method of a. mobile terminal apparatus comprising information display means for displaying various types of information and sensing a tactile sensation; the method **characterized in that**
when an electronic mail is received while displaying a television program on the information display means, notification display for notifying a message that the electronic mail is received is displayed on the information display means, and
when a tactile sensation to the notification display is sensed by the information display means, contents of the received electronic mail are displayed on the information display means while displaying the television program on the information display means.

11. The television display method of the mobile terminal apparatus according to Claim 10, **characterized in that**
when a tactile sensation to the notification display is sensed by the information display means, a display region of the information display means is divided into two, and
the television program is displayed in one of the two divided display regions, and the received electronic mail is displayed in the other of the two divided display regions.

12. The television display method of the mobile terminal apparatus according to Claim 11, **characterized in that** the television program is scaled down and displayed in the display region where the television program is to be displayed among the two divided display regions.

13. The television display method of the mobile terminal apparatus according to any one of Claims 10 to 12, **characterized in that**
when a voice telephone call is received while displaying the television program on the information display means, notification display for notifying a message that the voice telephone call is received is displayed on the information display means,
when tactile sensation to the notification display is sensed by the information display means, channel information indicating the television program being displayed on the information display means is temporarily stored, and the display of the television program is halted to enable the voice telephone call, and
when the voice telephone call ends, the halted television program is again displayed based on the temporarily-stored channel information.

14. The television display method of the mobile terminal apparatus according to any one of Claims 10 to 13, **characterized in that** as the notification display, at least one of a translucent ticker and an icon is displayed, the translucent ticker and the icon being configured such that the television program currently displayed in the information display means can be viewed.

15. The television display method of the mobile terminal apparatus according to Claim 14, **characterized in that** the translucent ticker is displayed with at least a name of a sender included therein.

16. A television display method of a mobile terminal apparatus comprising information display means for displaying various types of information and sensing a tactile sensation, the method **characterized in that**
when a voice telephone call is received while displaying a television program on the information display means, notification display for notifying a message that the voice telephone call is received is displayed on the information display means, and
when a tactile sensation to the notification display is sensed by the information display means, channel information indicating the television program being displayed on the information display means is temporarily stored, and the display of the television program is halted to enable the voice telephone call, and
when the voice telephone call ends, the halted television program is again displayed based on the temporarily-stored channel information.

17. The television display method of the mobile terminal apparatus according to Claim 16, **characterized in that** as the notification display, at least one of a translucent ticker and an icon is displayed, the translucent ticker and the icon being configured such that the television program currently displayed in the information display means can be viewed.

18. The television display method of the mobile terminal apparatus according to Claim 17, **characterized in that** the translucent ticker is displayed with at least a name of a sender included therein.

19. A program **characterized by** causing a computer to execute:
processing of displaying of various types of information and displaying a television program on information display means for sensing a tactile sensation;
processing of receiving an electronic mail while displaying the television program on the information display means;
processing of displaying, on the information display means, notification display for notifying a message that the electronic mail is received; and
processing of displaying contents of the received electronic mail on the information display means while displaying the television program on the information display means, when a tactile sensation to the notification display is sensed by the information display means.

20. The program according to Claim 19, **characterized by** causing a computer to execute:
processing of dividing a display region of the information display means into two, when a tactile sensation to the notification display is sensed by the information display means; and
processing of displaying the television program in one of the two divided display regions, and displaying the received electronic mail in the other of the two divided display regions.

21. The program according to Claim 20, **characterized by** causing a computer to execute processing of displaying the television program in a scaled-down size in the display region where the television program is to be displayed among the two divided display regions.

22. The program according to any one of Claims 19 to 21, **characterized by** causing a computer to execute:
processing of displaying, on the information display means, notification display for notifying a message that a voice telephone call is received when the voice telephone call is received while displaying the television program on the information display means;
processing of temporarily storing channel information indicating the television program being displayed on the information display means, and halting the display of the television program to enable the voice telephone call when tactile sensation to the notification display is sensed by the information display means, and
processing of again displaying the halted television program based on the temporarily-stored channel information when the voice telephone call ends.

23. The program according to any one of Claims 19 to 22, **characterized by** causing a computer to execute processing of displaying, as the notification display, at least one of a translucent ticker and an icon, the translucent ticker and the icon being configured such that the television program currently displayed in the information display means can be viewed.

24. The program according to Claim 23, **characterized by** causing a computer to execute processing of displaying the translucent ticker with at least a name of a sender included therein.

25. A program **characterized by** causing a computer to execute:
processing of displaying of various types of information and displaying a television program on information display means for sensing a tactile sensation;
processing of receiving a voice telephone can while displaying the television program on the information display means;
processing of displaying, on the information display means, notification display for notifying a message that the voice telephone call is received;
processing of temporarily storing channel information indicating the television program being displayed on the information display means, and halting the display of the television program to enable the voice telephone call, when a tactile sensation to the notification display is sensed by the information display means; and
processing of again displaying the halted television program based on the temporarily-stored channel information, when the voice telephone call ends.

26. The program according to Claim 25, **characterized by** causing a computer to execute processing of displaying, as the notification display, at least one of a translucent ticker and an icon, the translucent ticker and the icon being configured such that the television program currently displayed in the information display means can be viewed.

27. The program according to Claim 26, **characterized by** causing a computer to execute processing of displaying the translucent ticker with at least a name of a sender therein.
